# EUROPEAN PATENT APPLICATION

(11) **EP 2 924 891 A1**
(43) Date of publication of application: **30.09.2015**
(21) Application number: 12889429.2
(22) Date of filing: 07.12.2012
(51) Int. Cl.: H04B 10/079, H04B 10/293

(54) **AUTOMATIC POWER TESTING METHOD AND FIRST ROADM STATION**

(71) Applicant: Huawei Technologies Co., Ltd., Longgang District Shenzhen, Guangdong 518129 (CN)
(72) Inventor: CHEN, Chunhui, Shenzhen Guangdong 518129 (CN); ZHANG, Yinghua, Shenzhen Guangdong 518129 (CN); YAN, Xiao, Shenzhen Guangdong 518129 (CN); HU, Linqiang, Shenzhen Guangdong 518129 (CN)
(74) Representative: Maiwald Patentanwalts GmbH
(86) International application number: PCT/CN2012/086207
(87) International publication number: WO 2014/086044

(57) **Abstract**

Embodiments of the present invention provide an automatic power testing and tuning method and a first reconfigurable optical add/drop multiplexer ROADM site to improve signal receiving quality. The method includes: creating an optical cross-connection for a wavelength of a first service after receiving a first service request message, and then obtaining a deterioration balance value of a first optical signal-to-noise ratio of wavelengths of all services on the first optical multiplex section according to a current optical signal-to-noise ratio of the wavelengths of all the services on the first ROADM site and an optical signal-to-noise ratio on a next ROADM site, where the services pass through the first optical multiplex section; obtaining a first outbound target power of the wavelengths of all the services on the first ROADM site separately according to the obtained deterioration balance value of the first optical signal-to-noise ratio of the wavelengths of all the services on the first optical multiplex section; and finally, tuning a single-wavelength attenuation of the wavelengths of all the services according to the first outbound target power. The present invention is applicable to the communication field.

## Description

### TECHNICAL FIELD

The present invention relates to the communications field, and in particular, to an automatic power testing and tuning method and a first ROADM site.

### BACKGROUND

A wavelength division network refers to an optical network based on WDM (Wavelength Division Multiplexing, wavelength division multiplexing) transmission principles. While the WDM networking technology is getting mature and put into use, WDM network management changes and develops toward WDM network management that is schedulable, smart and oriented to service operation. An automatically switched optical network (ASON, Automatically Switched Optical Network) has an additional control plane and implements automatic connection management through signaling.

An automatic power testing and tuning method in the automatically switched optical network in the prior art is as follows:

In adding a new service wavelength, an optical cross-connection is created for the new service wavelength from a first ROADM (Reconfiguration Optical Add/drop Multiplexer, reconfigurable optical add/drop multiplexer) site of the service to a last ROADM site of the service consecutively, and a single-wavelength attenuation of the new service wavelength is set automatically according to a fixed single-wavelength nominal power.

In removing a service wavelength, the optical cross-connection corresponding to the service wavelength is removed from the first ROADM site of the service to the last ROADM site of the service consecutively, and lightwave resources of the removed service wavelength are released.

However, the above method disregards transmission performance difference between different wavelengths. For example, different wavelengths attenuate to different extents in a device, and the single-wavelength nominal power for calculating the attenuation to be set is different. Consequently, the actual outbound power of each wavelength fails to reach the nominal power, or, even if the actual outbound power reaches the nominal power, the power becomes unbalanced between different wavelengths after transmission over a long fiber, which leads to unsatisfactory quality of received signals.

In addition, the method disregards the impact caused by the added or removed wavelengths onto performance of the existing wavelengths when a bidirectional optical cross-connection is created or removed, which leads to deteriorated quality of the received signals of some service wavelengths in the network.

### SUMMARY

Embodiments of the present invention provide an automatic power testing and tuning method and a first reconfigurable optical add/drop multiplexer ROADM site to improve signal receiving quality.

To achieve this objective, the embodiments of the present invention employ the following technical solutions:

In a first aspect, an automatic power testing and tuning method is provided, where the method is applied to a first reconfigurable optical add/drop multiplexer ROADM site in an automatically switched optical network and includes:
receiving a first service request message, where the first service request message is a request for creating an optical cross-connection for a wavelength of a first service on the first ROADM site;
creating an optical cross-connection for the wavelength of the first service;
obtaining a deterioration balance value of a first optical signal-to-noise ratio of wavelengths of all services on a first optical multiplex section according to a current optical signal-to-noise ratio of the wavelengths of all the services on the first ROADM site and an optical signal-to-noise ratio on a next ROADM site, where the services pass through the first optical multiplex section, and the first optical multiplex section refers to an optical multiplex section between the first ROADM site of the first service and the next ROADM site of the first service;
obtaining a first outbound target power of the wavelengths of all the services on the first ROADM site separately according to the obtained deterioration balance value of the first optical signal-to-noise ratio of the wavelengths of all the services on the first optical multiplex section; and
tuning a single-wavelength attenuation of the wavelengths of all the services according to the first outbound target power.

In a first possible implementation, according to the first aspect, before creating an optical cross-connection for the wavelength of the first service, the method further includes:
receiving a first indication message, where the first indication message is a request for performing tuning on the first ROADM site, where the tuning is to tune an outbound power of a wavelength of an existing service on a second optical multiplex section to a second outbound target power of the wavelength of the existing service on the first ROADM site, the second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site; and
if the wavelength of the existing service exists on the second optical multiplex section, performing tuning on the first ROADM site, where the tuning is to tune the outbound power of the wavelength of the existing service to the second outbound target power of the wavelength of the existing service on the first ROADM site.

In a second possible implementation, according to the first aspect or the first possible implementation, after tuning a single-wavelength attenuation of the wavelengths of all the services according to the first outbound target power, the method further includes:
obtaining a current outbound power of the wavelengths of all the services on the first ROADM site;
determining whether a difference between the current outbound power of the wavelengths of all the services and the first outbound target power falls within a preset range;
if the difference between the current outbound power of the wavelengths of all the services and the first outbound target power does not fall within the preset range, obtaining a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, where the services pass through the first optical multiplex section;
obtaining a third outbound target power of the wavelengths of all the services on the first ROADM site separately according to the obtained deterioration balance value of the second optical signal-to-noise ratio of the wavelengths of all the services on the first optical multiplex section; and
tuning a single-wavelength attenuation of the wavelengths of all the services according to the third outbound target power.

In a third possible implementation, according to the first aspect or the first possible implementation or the second possible implementation, before creating an optical cross-connection for the wavelength of the first service, the method further includes:
reserving a wavelength resource for the optical cross-connection to be created for the wavelength of the first service.

In a second aspect, an automatic power testing and tuning method is provided, where the method is applied to a first reconfigurable optical add/drop multiplexer ROADM site in an automatically switched optical network and includes:
receiving a first service request message sent by a next ROADM site of a first service, where the first service request message is a request for removing an optical cross-connection on the first ROADM site, where the optical cross-connection is created for a wavelength of the first service;
removing the optical cross-connection created for the wavelength of the first service;
determining whether wavelengths of other services exist on the first optical multiplex section, where the first optical multiplex section refers to an optical multiplex section between the first ROADM site of the first service and the next ROADM site of the first service;
if the wavelengths of other services exist on the first optical multiplex section, obtaining a deterioration balance value of a third optical signal-to-noise ratio of the wavelengths of other services on the first optical multiplex section according to a current optical signal-to-noise ratio of the wavelengths of other services on the first optical multiplex section on the first ROADM site and an optical signal-to-noise ratio on the next ROADM site;
obtaining a fourth outbound target power of the wavelengths of other services on the first ROADM site separately according to the obtained deterioration balance value of the third optical signal-to-noise ratio of the wavelengths of other services on the first optical multiplex section; and
tuning a single-wavelength attenuation of the wavelengths of other services according to the fourth outbound target power.

In a first possible implementation, according to the second aspect, after tuning a single-wavelength attenuation of the wavelengths of other services according to the fourth outbound target power, the method further includes:
sending an operation request message to the next ROADM site of the first service, where the operation request message is a request for performing tuning on the next ROADM site, where the tuning is to tune an outbound power of the wavelengths of other services to a fifth outbound target power of the wavelengths of other services on the next ROADM site, and the fifth outbound target power is an outbound power of the wavelengths of other services on the next ROADM site when the optical cross-connection created for the wavelength of the first service is not removed from the first ROADM site.

In a second possible implementation, according to the second aspect or the first possible implementation, the first service request message is also a request for performing switching on the first ROADM site of the first service, where the switching is to switch the wavelength of the first service from the first optical multiplex section to a third optical multiplex section, and the third optical multiplex section refers to an optical multiplex section between the first ROADM site of the first service and a first next ROADM site of the first service that is switched; the method further includes:
obtaining a wavelength resource of the first service on the first ROADM site;
creating an optical cross-connection of the wavelength of the first service on the third optical multiplex section according to the wavelength resource;
obtaining a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, where the services pass through the third optical multiplex section;
obtaining a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section; and
tuning a single-wavelength attenuation of the wavelengths of all the services according to the sixth outbound target power.

In a third possible implementation, according to the second possible implementation, the obtaining a wavelength resource of the first service on the first ROADM site specifically includes:
after the optical cross-connection created for the wavelength of the first service is removed, obtaining the wavelength resource of the first service on the first ROADM site;
   or
obtaining the wavelength resource of the first service on the first ROADM site according to a reserved wavelength resource.

In a third aspect, a first reconfigurable optical add/drop multiplexer ROADM site is provided, where the first ROADM site includes a receiver and a processor, where:
the receiver is configured to receive a first service request message and send the first service request message to the processor, where the first service request message is a request for creating an optical cross-connection for a wavelength of a first service on the first ROADM site;
the processor is configured to receive the first service request message sent by the receiver and create an optical cross-connection for the wavelength of the first service;
the processor is further configured to obtain a deterioration balance value of a first optical signal-to-noise ratio of wavelengths of all services on a first optical multiplex section according to a current optical signal-to-noise ratio of the wavelengths of all the services on the first ROADM site and an optical signal-to-noise ratio on a next ROADM site, where the services pass through the first optical multiplex section, and the first optical multiplex section refers to an optical multiplex section between the first ROADM site of the first service and the next ROADM site of the first service;
the processor is further configured to obtain a first outbound target power of the wavelengths of all the services on the first ROADM site separately according to the obtained deterioration balance value of the first optical signal-to-noise ratio of the wavelengths of all the services on the first optical multiplex section; and
the processor is further configured to tune a single-wavelength attenuation of the wavelengths of all the services according to the first outbound target power.

In a first possible implementation, according to the third aspect, the receiver is further configured to receive a first indication message and send the first indication message to the processor, where the first indication message is a request for performing tuning on the first ROADM site, where the tuning is to tune an outbound power of a wavelength of an existing service on a second optical multiplex section to a second outbound target power of the wavelength of the existing service on the first ROADM site, the second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site; and
the processor is configured to: receive the first indication message sent by the receiver, and, if the wavelength of the existing service exists on the second optical multiplex section, perform tuning on the first ROADM site, where the tuning is to tune the outbound power of the wavelength of the existing service to the second outbound target power of the wavelength of the existing service on the first ROADM site.

In a second possible implementation, according to the third aspect or the first possible implementation, the processor is further configured to obtain a current outbound power of the wavelengths of all the services on the first ROADM site after tuning the single-wavelength attenuation of the wavelengths of all the services according to the first outbound target power;
the processor is further configured to determine whether a difference between the current outbound power of the wavelengths of all the services and the first outbound target power falls within a preset range;
the processor is further configured to: if the difference between the current outbound power of the wavelengths of all the services and the first outbound target power does not fall within the preset range, obtain a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, where the services pass through the first optical multiplex section;
the processor is further configured to obtain a third outbound target power of the wavelengths of all the services on the first ROADM site separately according to the obtained deterioration balance value of the second optical signal-to-noise ratio of the wavelengths of all the services on the first optical multiplex section; and
the processor is further configured to tune a single-wavelength attenuation of the wavelengths of all the services according to the third outbound target power.

In a third possible implementation, according to the third aspect or the first possible implementation or the second possible implementation, the first ROADM site further includes a memory, where:
the memory is configured to: before the optical cross-connection is created for the wavelength of the first service, reserve a wavelength resource for creating the optical cross-connection for the wavelength of the first service.

In a fourth aspect, a first reconfigurable optical add/drop multiplexer ROADM site is provided, where the first ROADM site includes a receiver and a processor, where:
the receiver is configured to receive a first service request message sent by a next ROADM site of a first service and send the first service request message to the processor, where the first service request message is a request for removing an optical cross-connection from the first ROADM site, where the optical cross-connection is created for a wavelength of the first service;
the processor is configured to receive the first service request message sent by the receiver and remove the optical cross-connection created for the wavelength of the first service;
the processor is further configured to determine whether wavelengths of other services exist on the first optical multiplex section, where the first optical multiplex section refers to an optical multiplex section between the first ROADM site of the first service and the next ROADM site of the first service;
the processor is further configured to: if the wavelengths of other services exist on the first optical multiplex section, obtain a deterioration balance value of a third optical signal-to-noise ratio of the wavelengths of other services on the first optical multiplex section according to a current optical signal-to-noise ratio of the wavelengths of other services on the first optical multiplex section on the first ROADM site and an optical signal-to-noise ratio on the next ROADM site;
the processor is further configured to obtain a fourth outbound target power of the wavelengths of other services on the first ROADM site separately according to the obtained deterioration balance value of the third optical signal-to-noise ratio of the wavelengths of other services on the first optical multiplex section; and
the processor is further configured to tune a single-wavelength attenuation of the wavelengths of other services according to the fourth outbound target power.

In a first possible implementation, according to the fourth aspect, the first ROADM site further includes a sender, where:
the sender is configured to send an operation request message to the next ROADM site of the first service after the single-wavelength attenuation of the wavelengths of other services is tuned according to the fourth outbound target power, where the operation request message is a request for performing tuning on the next ROADM site, where the tuning is to tune an outbound power of the wavelengths of other services to a fifth outbound target power of the wavelengths of other services on the next ROADM site, and the fifth outbound target power is an outbound power of the wavelengths of other services on the next ROADM site when the optical cross-connection created for the wavelength of the first service is not removed from the first ROADM site.

In a second possible implementation, according to the fourth aspect or the first possible implementation, the first service request message is also a request for performing switching on the first ROADM site of the first service, where the switching is to switch the wavelength of the first service from the first optical multiplex section to a third optical multiplex section, and the third optical multiplex section refers to an optical multiplex section between the first ROADM site of the first service and a first next ROADM site of the first service that is switched;
the processor is further configured to obtain a wavelength resource of the first service on the first ROADM site;
the processor is further configured to create an optical cross-connection of the wavelength of the first service on the third optical multiplex section according to the wavelength resource;
the processor is further configured to obtain a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, where the services pass through the third optical multiplex section;
the processor is further configured to obtain a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section; and
the processor is further configured to tune a single-wavelength attenuation of the wavelengths of all the services according to the sixth outbound target power.

In a third possible implementation, according to the second possible implementation, the obtaining, by the processor, a wavelength resource of the first service on the first ROADM site, specifically includes:
after the optical cross-connection created for the wavelength of the first service is removed, obtaining the wavelength resource of the first service on the first ROADM site;
   or
obtaining the wavelength resource of the first service on the first ROADM site according to a reserved wavelength resource.

In the automatic power testing and tuning method and the first reconfigurable optical add/drop multiplexer ROADM site provided in the embodiments of the present invention, after a first service request message is received, an optical cross-connection is created for the wavelength of the first service; and then a deterioration balance value of the first optical signal-to-noise ratio of wavelengths of all services on the first optical multiplex section is obtained according to the current optical signal-to-noise ratio of the wavelengths of all the services on the first ROADM site and the optical signal-to-noise ratio on the next ROADM site, where the services pass through the first optical multiplex section; then the first outbound target power of the wavelengths of all the services on the first ROADM site is obtained separately according to the obtained deterioration balance value of the first optical signal-to-noise ratio of the wavelengths of all the services on the first optical multiplex section; and finally, the single-wavelength attenuation of the wavelengths of all the services is tuned according to the first outbound target power.

Further, in the method, after the first service request message sent by the next ROADM site of the first service is received, the optical cross-connection created for the wavelength of the first service is removed; then the first optical multiplex section is checked to see whether wavelengths of other services exist; if the wavelengths of other services exist on the first optical multiplex section, a deterioration balance value of a third optical signal-to-noise ratio of the wavelengths of other services on the first optical multiplex section is obtained according to the current optical signal-to-noise ratio of the wavelengths of other services on the first optical multiplex section on the first ROADM site and an optical signal-to-noise ratio on the next ROADM site; then a fourth outbound target power of the wavelengths of other services on the first ROADM site is obtained separately according to the obtained deterioration balance value of the third optical signal-to-noise ratio of the wavelengths of other services on the first optical multiplex section; and finally, a single-wavelength attenuation of the wavelengths of other services is tuned according to the fourth outbound target power.

In the method, the corresponding testing and tuning method is used to test and tune the wavelength of each service according to the transmission feature difference between different wavelengths, and therefore, in the transmission process, the optical multiplex section keeps balanced between different wavelengths without being affected by increase or decrease of wavelengths, and the signal receiving quality is improved.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 illustrates an automatic power testing and tuning method according to an embodiment of the present invention;
FIG. 2 illustrates another automatic power testing and tuning method according to an embodiment of the present invention;
FIG. 3 is a service scenario diagram in an automatically switched optical network according to an embodiment of the present invention;
FIG. 4 illustrates an automatic power testing and tuning method on a first ROADM site in the case of adding a service according to an embodiment of the present invention;
FIG. 5 illustrates an automatic power testing and tuning method on a first ROADM site in the case of removing a service according to an embodiment of the present invention;
FIG. 6 is a schematic diagram of a first ROADM site according to an embodiment of the present invention;
FIG. 7 is a schematic diagram of another first ROADM site according to an embodiment of the present invention;
FIG. 8 is a schematic diagram of still another first ROADM site according to an embodiment of the present invention;
FIG. 9 is a schematic diagram of still another first ROADM site according to an embodiment of the present invention;
FIG. 10 is a schematic diagram of still another first ROADM site according to an embodiment of the present invention;
FIG. 11 is a schematic diagram of still another first ROADM site according to an embodiment of the present invention;
FIG. 12 is a schematic diagram of still another first ROADM site according to an embodiment of the present invention; and
FIG. 13 is a schematic diagram of still another first ROADM site according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

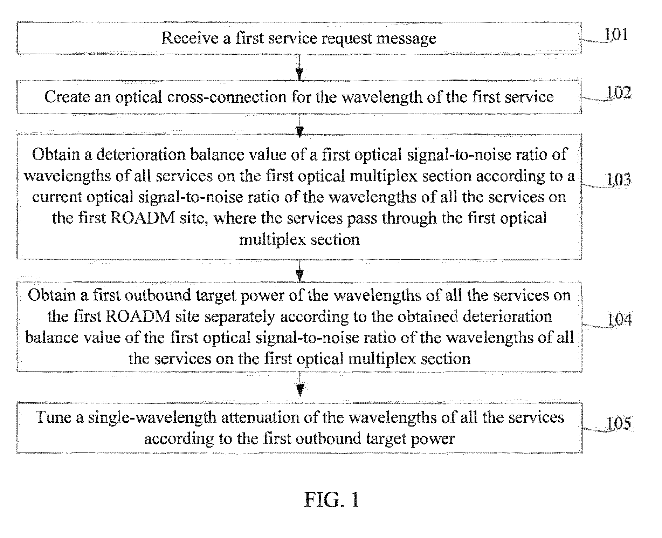

This embodiment of the present invention provides an automatic power testing and tuning method, where the method is applied to a first reconfigurable optical add/drop multiplexer ROADM site in an automatically switched optical network. As shown in FIG. 1, the method includes the following steps:
101. Receive a first service request message, where the first service request message is a request for creating an optical cross-connection for a wavelength of a first service on the first ROADM site.

It should be noted that the "first" in the "first service request message" herein has no special meaning, and denotes only the wavelength of the service currently processed on the first ROADM site.

The "first" in the "first ROADM site" has no special meaning either, and denotes only the ROADM site that the first service currently passes through.
102. Create an optical cross-connection for the wavelength of the first service.
103. Obtain a deterioration balance value of the first optical signal-to-noise ratio of wavelengths of all services on the first optical multiplex section according to the current optical signal-to-noise ratio of the wavelengths of all the services on the first ROADM site and the optical signal-to-noise ratio on the next ROADM site, where the services pass through the first optical multiplex section.

The first optical multiplex section refers to an optical multiplex section between the first ROADM site of the first service and the next ROADM site of the first service.

The deterioration is measured by a difference between an optical signal-to-noise ratio of the wavelength of a service on the first ROADM site and an optical signal-to-noise ratio on the next ROADM site. After an optical cross-connection is created for the wavelength of the first service, because the wavelengths have increased, the optical signal-to-noise ratio deterioration of the wavelengths of all services that pass through the first optical multiplex section may be not balanced any longer. In this case, to ensure quality of received signals, a deterioration balance value of the first optical signal-to-noise ratio of the wavelengths of all the services on the first optical multiplex section needs to be obtained first.

It should be noted that the "first" in the "deterioration balance value of the first optical signal-to-noise ratio" has no special meaning, and is intended only to distinguish the deterioration balance value of the optical signal-to-noise ratio at a different time.
104. Obtain a first outbound target power of the wavelengths of all the services on the first ROADM site separately according to the obtained deterioration balance value of the first optical signal-to-noise ratio of the wavelengths of all the services on the first optical multiplex section.

It should be noted that the wavelengths of all the services on the first optical multiplex section have their own first outbound target power, which depends on the deterioration balance value of the first optical signal-to-noise ratio.

The "first" in the "first outbound target power" has no special meaning, and is intended only to distinguish the outbound target power at a different time.
105. Tune a single-wavelength attenuation of the wavelengths of all the services according to the first outbound target power.

After the first service is added, the wavelengths of all services on the first optical multiplex section are tested and tuned, and a corresponding attenuation is set for the wavelength of each service according to the transmission feature difference between different wavelengths, and therefore, the wavelength increase brought by the added first service will surely not affect the wavelengths of other services on the first optical multiplex section, a better optical signal-to-noise ratio deterioration balance is maintained for the optical multiplex section, and the signal receiving quality is improved.

In the automatic power testing and tuning method provided in the embodiment of the present invention, after a first service request message is received, an optical cross-connection is created for the wavelength of the first service; then a deterioration balance value of the first optical signal-to-noise ratio of wavelengths of all services on the first optical multiplex section is obtained according to the current optical signal-to-noise ratio of the wavelengths of all the services on the first ROADM site and the optical signal-to-noise ratio on the next ROADM site, where the services pass through the first optical multiplex section; and then the first outbound target power of the wavelengths of all the services on the first ROADM site is obtained separately according to the obtained deterioration balance value of the first optical signal-to-noise ratio of the wavelengths of all the services on the first optical multiplex section; and finally, the single-wavelength attenuation of the wavelengths of all the services is tuned according to the first outbound target power.

In the method, after the optical cross-connection is created for the wavelength of the first service, both the wavelength of the service added on the first optical multiplex section and the wavelength of the existing service are tested and tuned, and, according to the transmission feature difference between different wavelengths, a corresponding attenuation is set for testing and tuning the wavelength of each service. Therefore, in the transmission process, the optical multiplex section keeps balanced between different wavelengths without being affected by the increase of wavelengths, and the signal receiving quality is improved.

### Embodiment 2

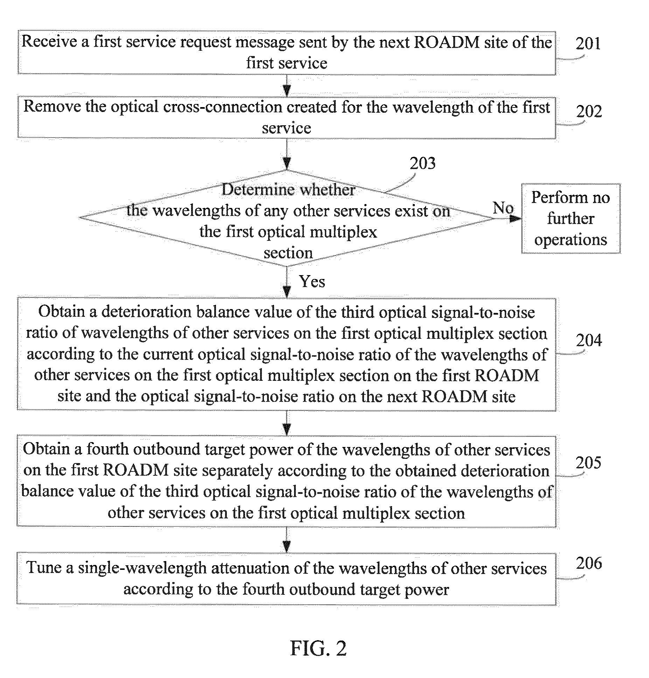

This embodiment of the present invention further provides an automatic power testing and tuning method. As shown in FIG. 2, the method includes the following steps:
201. Receive a first service request message sent by a next ROADM site of a first service, where the first service request message is a request for removing an optical cross-connection on the first ROADM site, where the optical cross-connection is created for a wavelength of the first service.

It should be noted that in the automatic power testing and tuning method, the optical cross-connection created for the wavelength of the first service is removed consecutively in a reverse direction from the last ROADM site of the first service to the first ROADM site, and therefore, the first ROADM site receives the first service request message sent by the next ROADM site of the first service. Specifically, a first next ROADM site may be understood as the last ROADM site of the first service.
202. Remove the optical cross-connection created for the wavelength of the first service.
203. Determine whether the wavelengths of any other services exist on the first optical multiplex section.

The first optical multiplex section refers to an optical multiplex section between the first ROADM site of the first service and the next ROADM site of the first service.

If the wavelengths of other services exist on the first optical multiplex section, step 204 is performed.

If no wavelength of other services exists on the first optical multiplex section, no further processing is required.
204. If the wavelengths of other services exist on the first optical multiplex section, obtain a deterioration balance value of a third optical signal-to-noise ratio of the wavelengths of other services on the first optical multiplex section according to the current optical signal-to-noise ratio of the wavelengths of other services on the first optical multiplex section on the first ROADM site and an optical signal-to-noise ratio on the next ROADM site.

The deterioration is measured by a difference between an optical signal-to-noise ratio of the wavelength of a service on the first ROADM site and an optical signal-to-noise ratio on the next ROADM site. After the optical cross-connection created for the wavelength of the first service is removed, because the wavelengths have decreased, the optical signal-to-noise ratio deterioration of the wavelengths of other services on the first optical multiplex section may be not balanced any longer. In this case, to ensure quality of received signals, a deterioration balance value of the third optical signal-to-noise ratio of the wavelengths of other services on the first optical multiplex section needs to be obtained first.

It should be noted that the "third" in the "deterioration balance value of the third optical signal-to-noise ratio" has no special meaning, and is intended only to distinguish the deterioration balance value of the optical signal-to-noise ratio at a different time.
205. Obtain a fourth outbound target power of the wavelengths of other services on the first ROADM site separately according to the obtained deterioration balance value of the third optical signal-to-noise ratio of the wavelengths of other services on the first optical multiplex section.

It should be noted that the wavelengths of other services on the first optical multiplex section have their own fourth outbound target power, which depends on the deterioration balance value of the third optical signal-to-noise ratio.

The "fourth" in the "fourth outbound target power" has no special meaning, and is intended only to distinguish the outbound target power at a different time.
206. Tune a single-wavelength attenuation of the wavelengths of other services according to the fourth outbound target power.

After the first service is removed, the power of wavelengths of other services on the first optical multiplex section is tested and tuned, and a corresponding attenuation is set for the wavelength of each service according to the transmission feature difference between different wavelengths, and therefore, the wavelength decrease brought by the removed first service will surely not affect the wavelengths of other services on the first optical multiplex section, a better optical signal-to-noise ratio deterioration balance is maintained for the optical multiplex section, and the signal receiving quality is improved.

In this method, when the optical cross-connection created for the wavelength of the first service is removed, each first ROADM site receives the first service request message sent by the next ROADM site, where the first service request message is a request for removing an optical cross-connection on the first ROADM site, where the optical cross-connection is created for the wavelength of the first service. The method of removing service wavelengths one by one from the downstream node of the service to the upstream node prevents the removed wavelength of the first service from interfering with the wavelengths of other services, and avoids the following problem that occurs in the prior art: the removal of the service wavelength from an upstream site leads to dropping of wavelengths in multiple downstream sections and affects the wavelengths of other services.

In the automatic power testing and tuning method provided in the embodiment of the present invention, after the first service request message sent by the next ROADM site of the first service is received, the optical cross-connection created for the wavelength of the first service is removed; then the first optical multiplex section is checked to see whether wavelengths of other services exist; if the wavelengths of other services exist on the first optical multiplex section, a deterioration balance value of a third optical signal-to-noise ratio of the wavelengths of other services on the first optical multiplex section is obtained according to the current optical signal-to-noise ratio of the wavelengths of other services on the first optical multiplex section on the first ROADM site and an optical signal-to-noise ratio on the next ROADM site; then a fourth outbound target power of the wavelengths of other services on the first ROADM site is obtained separately according to the obtained deterioration balance value of the third optical signal-to-noise ratio of the wavelengths of other services on the first optical multiplex section; and finally, a single-wavelength attenuation of the wavelengths of other services is tuned according to the fourth outbound target power.

In the method, after the optical cross-connection created for the wavelength of the first service is removed, the wavelengths of remaining services on the first optical multiplex section are tested and tuned, and, according to the transmission feature difference between different wavelengths, a corresponding attenuation is set for testing and tuning the wavelength of each service. Therefore, in the transmission process, the optical multiplex section keeps balanced between different wavelengths without being affected by the decrease of wavelengths, and the signal receiving quality is improved.

### Embodiment 3

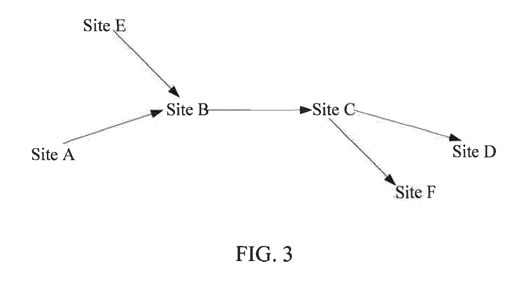

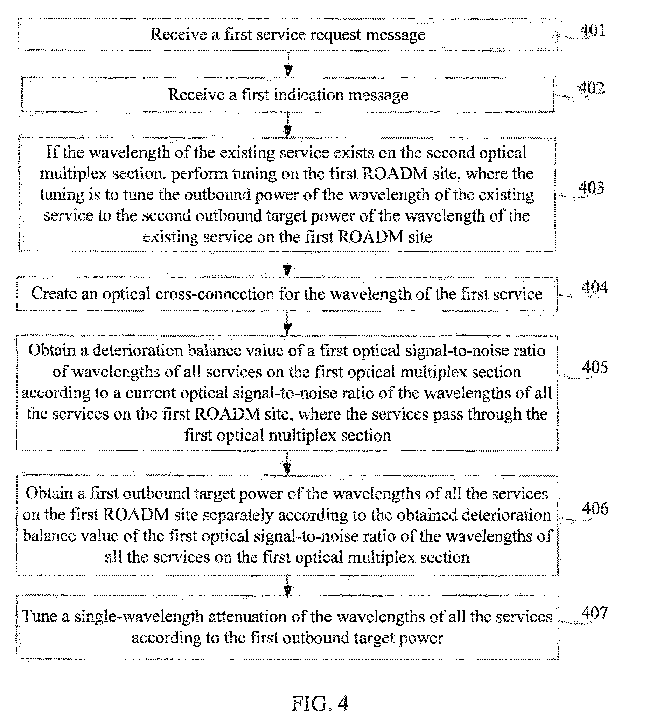

This embodiment of the present invention further provides an automatic power testing and tuning method, where the method is based on a first reconfigurable optical add/drop multiplexer ROADM site in an automatically switched optical network. As shown in FIG. 3, it is assumed that A-B-C-D is an existing wavelength service, a new E-B-C-F wavelength service is to be added, and the automatic power testing and tuning method is performed on the site B. As shown in FIG. 4, the method includes the following steps:
401. Receive a first service request message, where the first service request message is a request for creating an optical cross-connection for a wavelength of a first service on the first ROADM site.
402. Receive a first indication message, where the first indication message is a request for performing tuning on the first ROADM site, where the tuning is to tune the outbound power of the wavelength of the existing service on the second optical multiplex section to the second outbound target power of the wavelength of the existing service on the first ROADM site.

The second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site.

For the site B, the second optical multiplex section is an E-B section, and the existing service refers to a service that passes through the E-B section except the first service. At this time, the E-B section has only the wavelength of the first service and has no wavelength of other services. The second outbound target power is an outbound power of the existing service on the second optical multiplex section E-B on the site B when no optical cross-connection is created for the wavelength of the first service on the site E.
403. If the wavelength of the existing service exists on the second optical multiplex section, perform tuning on the first ROADM site, where the tuning is to tune the outbound power of the wavelength of the existing service to the second outbound target power of the wavelength of the existing service on the first ROADM site.

Specifically, in the case that the wavelength of the existing service exists on the second optical multiplex section, because the wavelength of the new service is added after an optical cross connection is created for the wavelength of the first service, power tuning is performed for the wavelength of each service on the second optical multiplex section. Therefore, when the wavelength of the existing service on the second optical multiplex section enters the first ROADM site, the inbound power changes from what it is before the wavelength of the first service is created on the previous ROADM site. That is, the outbound power changes from what it is before the wavelength of the first service is created on the previous ROADM site. At this time, in order to prevent the wavelength of the existing service on the second optical multiplex section from being affected by the change, the outbound power of the wavelength of the existing service is tuned to a second outbound target power of the wavelength of the existing service on the first ROADM site.

It should be noted that the second outbound target power is the outbound power of the wavelength of the existing service on the first ROADM site when no optical cross connection is created for the wavelength of the first service on the previous ROADM site. Through the testing and tuning, the wavelength of the existing service on the second optical multiplex section is prevented from being affected by the wavelength increase caused by the adding of the new service.

Specifically, for the site B, because no existing service exists on the second optical multiplex section E-B, step 403 is not performed.
404. Create an optical cross-connection for the wavelength of the first service.
405. Obtain a deterioration balance value of the first optical signal-to-noise ratio of wavelengths of all services on the first optical multiplex section according to the current optical signal-to-noise ratio of the wavelengths of all the services on the first ROADM site and the optical signal-to-noise ratio on the next ROADM site, where the services pass through the first optical multiplex section.

The first optical multiplex section refers to an optical multiplex section between the first ROADM site of the first service and the next ROADM site of the first service.

The deterioration is measured by a difference between an optical signal-to-noise ratio of the wavelength of a service on the first ROADM site and an optical signal-to-noise ratio on the next ROADM site. After an optical cross-connection is created for the wavelength of the first service, because the wavelengths have increased, the optical signal-to-noise ratio deterioration of the wavelengths of all services that pass through the first optical multiplex section may be not balanced any longer. In this case, to ensure quality of received signals, a deterioration balance value of the first optical signal-to-noise ratio of the wavelengths of all the services on the first optical multiplex section needs to be obtained first.

Specifically, for the site B, all services that pass through the first optical multiplex section are the A-B-C-D wavelength service and the E-B-C-F wavelength service. Therefore, the deterioration balance value of the first optical signal-to-noise ratio is obtained according to the current optical signal-to-noise ratio of the wavelength of the A-B-C-D service on the first ROADM site and the optical signal-to-noise ratio of this wavelength on the next ROADM site, and according to the current optical signal-to-noise ratio of the wavelength of the E-B-C-F service on the first ROADM site and the optical signal-to-noise ratio of this wavelength on the next ROADM site.
406. Obtain a first outbound target power of the wavelengths of all the services on the first ROADM site separately according to the obtained deterioration balance value of the first optical signal-to-noise ratio of the wavelengths of all the services on the first optical multiplex section.

It should be noted that the wavelengths of all the services on the first optical multiplex section have their own first outbound target power, which depends on the deterioration balance value of the first optical signal-to-noise ratio.

The "first" in the "first outbound target power" has no special meaning, and is intended only to distinguish the outbound target power at a different time.

Specifically, for the site B, the first outbound target power of the wavelength of the A-B-C-D service on the site B and the first outbound target power of the wavelength of the E-B-C-F service on the site B are obtained separately.
407. Tune a single-wavelength attenuation of the wavelengths of all the services according to the first outbound target power.

The single-wavelength attenuation of the wavelengths of all services is tuned to prevent other service wavelengths of the first optical multiplex section from being affected by the wavelength increase caused by the adding of the new service, ensure the optical signal-to-noise ratio deterioration balance of the optical multiplex section, and improve the signal receiving quality.

Similarly, when a new E-B-C-F wavelength service is added, for the site E, because the site E is a first site of the first service, no second optical multiplex section exists, no wavelength of an existing service exists on the second optical multiplex section, and the site E does not perform step 403, but performs steps 401, 402, 404, 405, 406, and 407.

When a new E-B-C-F wavelength service is added, for the site C, because a wavelength of an existing service, that is, the wavelength of the A-B-C-D service, exists on the second optical multiplex section B-C, the site C performs steps 401, 402, 403, 404, 405, 406, and 407.

When a new E-B-C-F wavelength service is added, the site F is a last site of the E-B-C-F service, and no existing service exists on the second optical multiplex section C-F, and therefore, only the actions of receiving the first service request message and the first indication message and creating an optical cross-connection for the wavelength of the first service are performed.

Now the entire E-B-C-F wavelength service is created.

Further, the current actual outbound power of the wavelengths of all the services may be different from the first outbound target power after the single-wavelength attenuation of the wavelengths of all the services is tuned according to the first outbound target power. Therefore, feedback tuning needs to be further performed, that is, after the single-wavelength attenuation of the wavelengths of all the services is tuned according to the first outbound target power, the method further includes:
obtaining a current outbound power of the wavelengths of all the services on the first ROADM site;
determining whether a difference between the current outbound power of the wavelengths of all the services and the first outbound target power falls within a preset range;
if the difference between the current outbound power of the wavelengths of all the services and the first outbound target power does not fall within the preset range, obtaining a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, where the services pass through the first optical multiplex section;
obtaining a third outbound target power of the wavelengths of all the services on the first ROADM site separately according to the obtained deterioration balance value of the second optical signal-to-noise ratio of the wavelengths of all the services on the first optical multiplex section; and
tuning a single-wavelength attenuation of the wavelengths of all the services according to the third outbound target power.

It should be noted that the "second" in the "deterioration balance value of the second optical signal-to-noise ratio" has no special meaning, and is intended only to distinguish the deterioration balance value of the optical signal-to-noise ratio at a different time.

The "third" in the "third outbound target power" has no special meaning, and is intended only to distinguish the outbound target power at a different time.

Further, if the expected effect is not accomplished after a feedback tuning is performed, the feedback tuning may be performed repeatedly until the difference between the current outbound power of the wavelengths of all the services and the outbound target power falls within a preset range, which is not limited herein.

Optionally, before creating an optical cross-connection for the wavelength of the first service, the method further includes:
reserving a wavelength resource for the optical cross-connection to be created for the wavelength of the first service.

Through an RSVP (Resource Reservation Protocol, Resource Reservation Protocol), a logical LSP (Label Switched Path, label switching path) may be created on a new path first before a new service wavelength is created, that is, only the wavelength resource required by the wavelength service is allocated and reserved, and no actual optical cross-connection is created. In this way, the resource required by the service is reserved completely first, thereby ensuring that the subsequent process of creating an optical cross-connection and tuning the power will not be frustrated by resource conflict.

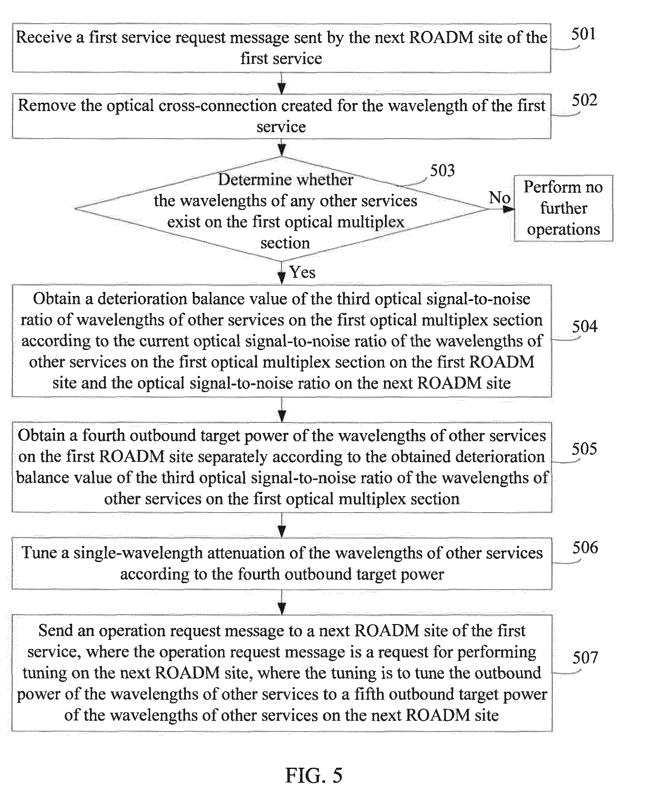

This embodiment of the present invention further provides an automatic power testing and tuning method, where the method is based on a first reconfigurable optical add/drop multiplexer ROADM site in an automatically switched optical network. Specifically, it is assumed that an automatic power testing and tuning method is performed on the site B when the wavelength of an A-B-C-D service is removed on the basis of the existing service shown in FIG. 3. Specifically, as shown in FIG. 5, the method includes the following steps:
501. Receive a first service request message sent by a next ROADM site of a first service, where the first service request message is a request for removing an optical cross-connection on the first ROADM site, where the optical cross-connection is created for a wavelength of the first service.

It should be noted that in the automatic power testing and tuning method, the optical cross-connection created for the wavelength of the first service is removed consecutively in a reverse direction from the last ROADM site of the first service to the first ROADM site, and therefore, the first ROADM site receives the first service request message sent by the next ROADM site of the first service. Specifically, a first next ROADM site may be understood as the last ROADM site of the first service.

Specifically, for the site B, the next ROADM site of the first service is site C, and therefore, the site B receives the first service request message sent from the site C.
502. Remove the optical cross-connection created for the wavelength of the first service.
503. Determine whether the wavelengths of any other services exist on the first optical multiplex section.

The first optical multiplex section refers to an optical multiplex section between the first ROADM site of the first service and the next ROADM site of the first service.

If the wavelengths of other services exist on the first optical multiplex section, step 504 is performed.

If no wavelength of other services exists on the first optical multiplex section, no further processing is required.

Specifically, as shown in FIG. 3, for the site B, after the wavelength of the A-B-C-D service is removed, the wavelength of the E-B-C-F service still exists on the first optical multiplex section.
504. If the wavelengths of other services exist on the first optical multiplex section, obtain a deterioration balance value of a third optical signal-to-noise ratio of the wavelengths of other services on the first optical multiplex section according to the current optical signal-to-noise ratio of the wavelengths of other services on the first optical multiplex section on the first ROADM site and an optical signal-to-noise ratio on the next ROADM site.

The deterioration is measured by a difference between an optical signal-to-noise ratio of the wavelength of a service on the first ROADM site and an optical signal-to-noise ratio on the next ROADM site. After the optical cross-connection created for the wavelength of the first service is removed, because the wavelengths have decreased, the optical signal-to-noise ratio deterioration of the wavelengths of other services on the first optical multiplex section may be not balanced any longer. In this case, to ensure quality of received signals, a deterioration balance value of the third optical signal-to-noise ratio of the wavelengths of other services on the first optical multiplex section needs to be obtained first.

It should be noted that the "third" in the "deterioration balance value of the third optical signal-to-noise ratio" has no special meaning, and is intended only to distinguish the deterioration balance value of the optical signal-to-noise ratio at a different time.

Specifically, for the site B, because the wavelength of the E-B-C-F service still exists on the first optical multiplex section, a deterioration balance value of a third optical signal-to-noise ratio of the wavelength of the E-B-C-F service on the first optical multiplex section is obtained according to the current optical signal-to-noise ratio of the wavelength of the E-B-C-F service on the site B and the optical signal-to-noise ratio on the site C.
505. Obtain a fourth outbound target power of the wavelengths of other services on the first ROADM site separately according to the obtained deterioration balance value of the third optical signal-to-noise ratio of the wavelengths of other services on the first optical multiplex section.

It should be noted that the wavelengths of other services on the first optical multiplex section have their own fourth outbound target power, which depends on the deterioration balance value of the third optical signal-to-noise ratio.

The "fourth" in the "fourth outbound target power" has no special meaning, and is intended only to distinguish the outbound target power at a different time.

Specifically, for the site B, the fourth outbound target power of the wavelength of the E-B-C-F service on the site B is obtained at this time.
506. Tune a single-wavelength attenuation of the wavelengths of other services according to the fourth outbound target power.

Here, after the first service is removed, the power of wavelengths of other services on the first optical multiplex section is tested and tuned, and a corresponding attenuation is set for the wavelength of each service according to the transmission feature difference between different wavelengths, and therefore, the wavelength decrease brought by the removed first service will surely not affect the wavelengths of other services on the first optical multiplex section, a better optical signal-to-noise ratio deterioration balance is maintained for the optical multiplex section, and the signal receiving quality is improved.
507. Send an operation request message to a next ROADM site of the first service, where the operation request message is a request for performing tuning on the next ROADM site, where the tuning is to tune the outbound power of the wavelengths of other services to a fifth outbound target power of the wavelengths of other services on the next ROADM site.

The fifth outbound target power is the outbound power of the wavelengths of other services on the next ROADM site when the optical cross connection created for the wavelength of the first service is not removed from the first ROADM site.

Tuning is performed for the wavelengths of other services on the first optical multiplex section on the first ROADM site after the optical cross connection created for the wavelength of the first service is removed, and therefore, when the wavelengths of other services enter the next ROADM site, the inbound power changes from what it is before the optical cross-connection created for the first service is removed from the first ROADM site. That is, the outbound power changes from what it is before the optical cross-connection created for the first service is removed from the first ROADM site. At this time, in order to prevent the wavelengths of other services on the first optical multiplex section from being affected by the change, an operation request message should be sent to the next ROADM site of the first service, where the operation request message is a request for performing tuning on the next ROADM site, where the tuning is to tune the outbound power of the wavelengths of other services to a fifth outbound target power of the wavelengths of other services on the next ROADM site. In this way, it is ensured that the downstream power of the next ROADM site does not change. Otherwise, the power of the C-F optical multiplex section will change, which affects the deterioration balance of the optical multiplex section and the quality of received signals.

Similarly, when the A-B-C-D wavelength service is removed, for the site C, because the site C determines that no wavelength of other services exists on the first optical multiplex section C-D when performing step 503, the site C performs no further operations but performs only steps 501, 502, and 503.

When the A-B-C-D wavelength service is removed, for the site A, because the site A determines that no wavelength of other services exists on the first optical multiplex section A-B when performing step 503, the site A performs no further operations but performs only steps 501, 502, and 503. At this time, the signal source receives a request message for removing the first service, which indicates completion of removing the A-B-C-D wavelength service.

In this method, when the optical cross-connection created for the wavelength of the first service is removed, each first ROADM site receives the first service request message sent by the next ROADM site, where the first service request message is a request for removing an optical cross-connection on the first ROADM site, where the optical cross-connection is created for the wavelength of the first service. The method of removing service wavelengths one by one from the downstream node of the service to the upstream node prevents the removed wavelength of the first service from interfering with the wavelengths of other services, and avoids the following problem that occurs in the prior art: the removal of the service wavelength from an upstream site leads to dropping of wavelengths in multiple downstream sections and affects the wavelengths of other services.

Optionally, the first service request message is also a request for performing switching on the first ROADM site of the first service, where the switching is to switch the wavelength of the first service from the first optical multiplex section to a third optical multiplex section, and the third optical multiplex section refers to an optical multiplex section between the first ROADM site of the first service and a first next ROADM site of the first service that is switched.

The method further includes:
obtaining a wavelength resource of the first service on the first ROADM site;
creating an optical cross-connection of the wavelength of the first service on the third optical multiplex section according to the wavelength resource;
obtaining a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, where the services pass through the third optical multiplex section;
obtaining a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section; and
tuning a single-wavelength attenuation of the wavelengths of all the services according to the sixth outbound target power.

It should be noted that the first next ROADM site is a specific ROADM site different from the next ROADM site, and the next ROADM site is the next ROADM site of the first service before link switching; and the first next ROADM site is the next ROADM site of the first service after link switching.

Further, the obtaining a wavelength resource of the first service on the first ROADM site specifically includes:
after the optical cross-connection created for the wavelength of the first service is removed, obtaining the wavelength resource of the first service on the first ROADM site;
or
obtaining the wavelength resource of the first service on the first ROADM site according to a reserved wavelength resource.

In the link switching process, according to the features of a demultiplexing board of the first ROADM site, if the demultiplexing board has no lightwave reproducing function just like a WSD (Wavelength Selective Switching Demultiplexing Board, wavelength selective switching demultiplexing board), it is necessary to delete the optical cross-connection created for the wavelength of the first service before the wavelength resource of the first service on the first ROADM site can be obtained according to the wavelength resource of the first service that is released by the first optical multiplex section. As a result, in the link switching, it is necessary to remove the optical cross-connection created for the wavelength of the first service first, and then create an optical cross-connection for the wavelength of the first service.

Certainly, in the link switching process, according to the features of the demultiplexing board of the first ROADM site, if the demultiplexing board has a lightwave reproducing function just like an RDU (ROADM Demultiplexing Board, demultiplexing board), the wavelength resource of the first service on the first ROADM site can be obtained according to the reserved wavelength resource. In this way, no definite order exists between the step of removing the optical cross-connection created for the wavelength of the first service and the step of creating an optical cross-connection for the wavelength of the first service, and the order is not limited herein.

For the detailed process of removing the optical cross-connection on the first ROADM site in the link switching process, where the optical cross-connection is created for the wavelength of the first service, reference may be made to the embodiments shown in FIG. 2 and FIG. 5, and no repeated description is given here any further.

For the detailed process of creating an optical cross-connection on the first ROADM site in the link switching process, where the optical cross-connection is an optical cross-connection of the wavelength of the first service on the third optical multiplex section, reference may be made to the embodiments shown in FIG. 1 and FIG. 4, and no repeated description is given here any further.

In the automatic power testing and tuning method provided in the embodiment of the present invention, after a first service request message is received, an optical cross-connection is created for the wavelength of the first service; then a deterioration balance value of the first optical signal-to-noise ratio of wavelengths of all services on the first optical multiplex section is obtained according to the current optical signal-to-noise ratio of the wavelengths of all the services on the first ROADM site and the optical signal-to-noise ratio on the next ROADM site, where the services pass through the first optical multiplex section; and then the first outbound target power of the wavelengths of all the services on the first ROADM site is obtained separately according to the obtained deterioration balance value of the first optical signal-to-noise ratio of the wavelengths of all the services on the first optical multiplex section; and finally, the single-wavelength attenuation of the wavelengths of all the services is tuned according to the first outbound target power.

Further, in the method, after the first service request message sent by the next ROADM site of the first service is received, the optical cross-connection created for the wavelength of the first service is removed; then the first optical multiplex section is checked to see whether wavelengths of other services exist; if the wavelengths of other services exist on the first optical multiplex section, a deterioration balance value of a third optical signal-to-noise ratio of the wavelengths of other services on the first optical multiplex section is obtained according to the current optical signal-to-noise ratio of the wavelengths of other services on the first optical multiplex section on the first ROADM site and an optical signal-to-noise ratio on the next ROADM site; then a fourth outbound target power of the wavelengths of other services on the first ROADM site is obtained separately according to the obtained deterioration balance value of the third optical signal-to-noise ratio of the wavelengths of other services on the first optical multiplex section; and finally, a single-wavelength attenuation of the wavelengths of other services is tuned according to the fourth outbound target power.

In the automatic power testing and tuning method in the foregoing embodiment, the corresponding testing and tuning method is used to test and tune the wavelength of each service according to the transmission feature difference between different wavelengths, and therefore, in the transmission process, the optical multiplex section keeps balanced between different wavelengths without being affected by increase or decrease of wavelengths, and the signal receiving quality is improved.

### Embodiment 4

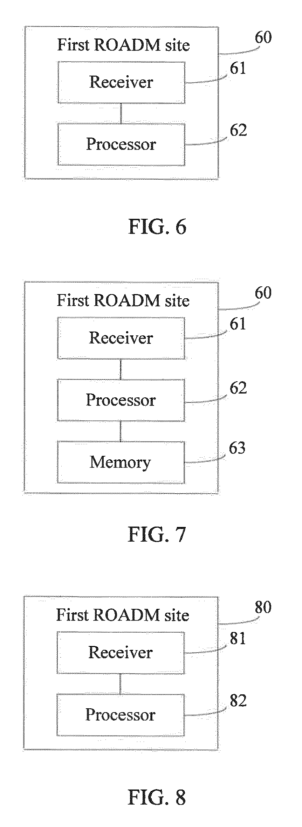

This embodiment of the present invention provides a first reconfigurable optical add/drop multiplexer ROADM site 60. As shown in FIG. 6, the first ROADM site 60 includes a receiver 61 and a processor 62.

The receiver 61 is configured to receive a first service request message and send the first service request message to the processor 62, where the first service request message is a request for creating an optical cross-connection for a wavelength of a first service on the first ROADM site.

It should be noted that the "first" in the "first service request message" herein has no special meaning, and denotes only the wavelength of the service currently processed on the first ROADM site.

The "first" in the "first ROADM site" has no special meaning either, and denotes only the ROADM site that the first service currently passes through.

The processor 62 is configured to receive the first service request message sent by the receiver 61 and create an optical cross-connection for the wavelength of the first service.

The processor 62 is further configured to obtain a deterioration balance value of a first optical signal-to-noise ratio of wavelengths of all services on a first optical multiplex section according to a current optical signal-to-noise ratio of the wavelengths of all the services on the first ROADM site and an optical signal-to-noise ratio on a next ROADM site, where the services pass through the first optical multiplex section, and the first optical multiplex section refers to an optical multiplex section between the first ROADM site of the first service and the next ROADM site of the first service.

The deterioration is measured by a difference between an optical signal-to-noise ratio of the wavelength of a service on the first ROADM site and an optical signal-to-noise ratio on the next ROADM site. After an optical cross-connection is created for the wavelength of the first service, because the wavelengths have increased, the optical signal-to-noise ratio deterioration of the wavelengths of all services that pass through the first optical multiplex section may be not balanced any longer. In this case, to ensure quality of received signals, a deterioration balance value of the first optical signal-to-noise ratio of the wavelengths of all the services on the first optical multiplex section needs to be obtained first.

It should be noted that the "first" in the "deterioration balance value of the first optical signal-to-noise ratio" has no special meaning, and is intended only to distinguish the deterioration balance value of the optical signal-to-noise ratio at a different time.

The processor 62 is further configured to obtain a first outbound target power of the wavelengths of all the services on the first ROADM site separately according to the obtained deterioration balance value of the first optical signal-to-noise ratio of the wavelengths of all the services on the first optical multiplex section.

It should be noted that the wavelengths of all the services on the first optical multiplex section have their own first outbound target power, which depends on the deterioration balance value of the first optical signal-to-noise ratio.

The "first" in the "first outbound target power" has no special meaning, and is intended only to distinguish the outbound target power at a different time.

The processor 62 is further configured to tune a single-wavelength attenuation of the wavelengths of all the services according to the first outbound target power.

After the first service is added, the processor 62 tests and tunes the wavelengths of all services on the first optical multiplex section, and sets a corresponding attenuation for the wavelength of each service according to the transmission feature difference between different wavelengths, and therefore, the wavelength increase brought by the added first service will surely not affect the wavelengths of other services on the first optical multiplex section, a better optical signal-to-noise ratio deterioration balance is maintained for the optical multiplex section, and the signal receiving quality is improved.

Further, the receiver 61 is further configured to: receive a first indication message and send the first indication message to the processor 62, where the first indication message is a request for performing tuning on the first ROADM site, where the tuning is to tune the outbound power of the wavelength of the existing service on the second optical multiplex section to the second outbound target power of the wavelength of the existing service on the first ROADM site.

The second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site.

The processor 62 is configured to: receive the first indication message sent by the receiver 61, and, if the wavelength of the existing service exists on the second optical multiplex section, perform tuning on the first ROADM site, where the tuning is to tune the outbound power of the wavelength of the existing service to the second outbound target power of the wavelength of the existing service on the first ROADM site.

Specifically, in the case that the wavelength of the existing service exists on the second optical multiplex section, because the wavelength of the new service is added after an optical cross connection is created for the wavelength of the first service, power tuning is performed for the wavelength of each service on the second optical multiplex section. Therefore, when the wavelength of the existing service on the second optical multiplex section enters the first ROADM site, the inbound power changes from what it is before the wavelength of the first service is created on the previous ROADM site. That is, the outbound power changes from what it is before the wavelength of the first service is created on the previous ROADM site. At this time, in order to prevent the wavelength of the existing service on the second optical multiplex section from being affected by the change, the outbound power of the wavelength of the existing service is tuned to a second outbound target power of the wavelength of the existing service on the first ROADM site.

Through the testing and tuning, the wavelength of the existing service on the second optical multiplex section is prevented from being affected by the wavelength increase caused by the adding of the new service.

Certainly, if no wavelength of the existing service exists on the second optical multiplex section, it indicates that no existing service exists on the second optical multiplex section before the first service is newly added. Therefore, after the first service is added, the first ROADM site does not need to tune the outbound power of the wavelength of the existing service to the second outbound target power of the wavelength of the existing service on the first ROADM site.

Further, the processor 62 is further configured to obtain a current outbound power of the wavelengths of all the services on the first ROADM site after tuning the single-wavelength attenuation of the wavelengths of all the services according to the first outbound target power.

The processor 62 is further configured to determine whether a difference between the current outbound power of the wavelengths of all the services and the first outbound target power falls within a preset range.

The processor 62 is further configured to: if the difference between the current outbound power of the wavelengths of all the services and the first outbound target power does not fall within the preset range, obtain a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, where the services pass through the first optical multiplex section.

The processor 62 is further configured to obtain a third outbound target power of the wavelengths of all the services on the first ROADM site separately according to the obtained deterioration balance value of the second optical signal-to-noise ratio of the wavelengths of all the services on the first optical multiplex section.

The processor 62 is further configured to tune a single-wavelength attenuation of the wavelengths of all the services according to the third outbound target power.

It should be noted that the "second" in the "deterioration balance value of the second optical signal-to-noise ratio" has no special meaning, and is intended only to distinguish the deterioration balance value of the optical signal-to-noise ratio at a different time.

The "third" in the "third outbound target power" has no special meaning, and is intended only to distinguish the outbound target power at a different time.

Further, if the expected effect is not accomplished after a feedback tuning is performed, the feedback tuning may be performed repeatedly until the difference between the current outbound power of the wavelengths of all the services and the outbound target power falls within a preset range, which is not limited herein.

Optionally, as shown in FIG. 7, the first ROADM site further includes a memory 63.

The memory 63 is configured to: before the optical cross-connection is created for the wavelength of the first service, reserve a wavelength resource for creating the optical cross-connection for the wavelength of the first service.

Through an RSVP (Resource Reservation Protocol, Resource Reservation Protocol), a logical LSP (Label Switched Path, label switching path) may be created on a new path first before a new service wavelength is created, that is, only the wavelength resource required by the wavelength service is allocated and reserved, and no actual optical cross-connection is created. In this way, the resource required by the service is reserved completely first, thereby ensuring that the subsequent process of creating an optical cross-connection and tuning the power will not be frustrated by resource conflict.

For the detailed process of creating a new service on the site, reference may be made to the embodiments shown in FIG. 1 and FIG. 4, and no repeated description is given here any further.

The embodiment of the present invention provides a first ROADM site, where the first ROADM site includes a receiver and a processor. After the receiver receives a first service request message, the processor creates an optical cross-connection for the wavelength of the first service; then the processor obtains a deterioration balance value of the first optical signal-to-noise ratio of wavelengths of all services on the first optical multiplex section according to the current optical signal-to-noise ratio of the wavelengths of all the services on the first ROADM site and the optical signal-to-noise ratio on the next ROADM site, where the services pass through the first optical multiplex section; and then the processor obtains the first outbound target power of the wavelengths of all the services on the first ROADM site separately according to the obtained deterioration balance value of the first optical signal-to-noise ratio of the wavelengths of all the services on the first optical multiplex section; and finally, the processor tunes the single-wavelength attenuation of the wavelengths of all the services according to the first outbound target power.

As described in the foregoing embodiment, after creating an optical cross-connection for the wavelength of the first service, the first ROADM site tests and tunes both the wavelength of the service added on the first optical multiplex section and the wavelength of the existing service, and, according to the transmission feature difference between different wavelengths, sets a corresponding attenuation for testing and tuning the wavelength of each service. Therefore, in the transmission process, the optical multiplex section keeps balanced between different wavelengths without being affected by the increase of wavelengths, and the signal receiving quality is improved.

### Embodiment 5

This embodiment of the present invention further provides a first reconfigurable optical add/drop multiplexer ROADM site 80. As shown in FIG. 8, the first ROADM site includes a receiver 81 and a processor 82.

The receiver 81 is configured to receive a first service request message sent by a next ROADM site of a first service and send the first service request message to the processor 82, where the first service request message is a request for removing an optical cross-connection from the first ROADM site, where the optical cross-connection is created for a wavelength of the first service.

It should be noted that in the automatic power testing and tuning method, the optical cross-connection created for the wavelength of the first service is removed consecutively in a reverse direction from the last ROADM site of the first service to the first ROADM site, and therefore, the receiver 81 receives the first ROADM site receives the first service request message sent by the next ROADM site of the first service. Specifically, a first next ROADM site may be understood as the last ROADM site of the first service.

The processor 82 is configured to receive the first service request message sent by the receiver 81 and remove the optical cross-connection created for the wavelength of the first service.

The processor 82 is further configured to determine whether wavelengths of other services exist on the first optical multiplex section, where the first optical multiplex section refers to an optical multiplex section between the first ROADM site of the first service and the next ROADM site of the first service.

The processor 82 is further configured to: if the wavelengths of other services exist on the first optical multiplex section, obtain a deterioration balance value of a third optical signal-to-noise ratio of the wavelengths of other services on the first optical multiplex section according to a current optical signal-to-noise ratio of the wavelengths of other services on the first optical multiplex section on the first ROADM site and an optical signal-to-noise ratio on the next ROADM site.

The deterioration is measured by a difference between an optical signal-to-noise ratio of the wavelength of a service on the first ROADM site and an optical signal-to-noise ratio on the next ROADM site. After the optical cross-connection created for the wavelength of the first service is removed, because the wavelengths have decreased, the optical signal-to-noise ratio deterioration of the wavelengths of other services on the first optical multiplex section may be not balanced any longer. In this case, to ensure quality of received signals, a deterioration balance value of the third optical signal-to-noise ratio of the wavelengths of other services on the first optical multiplex section needs to be obtained first.

It should be noted that the "third" in the "deterioration balance value of the third optical signal-to-noise ratio" has no special meaning, and is intended only to distinguish the deterioration balance value of the optical signal-to-noise ratio at a different time.

Certainly, if no wavelength of other services exists on the first optical multiplex section, no further processing is required.

The processor 82 is further configured to obtain a fourth outbound target power of the wavelengths of other services on the first ROADM site separately according to the obtained deterioration balance value of the third optical signal-to-noise ratio of the wavelengths of other services on the first optical multiplex section.

It should be noted that the wavelengths of other services on the first optical multiplex section have their own fourth outbound target power, which depends on the deterioration balance value of the third optical signal-to-noise ratio.

The "fourth" in the "fourth outbound target power" has no special meaning, and is intended only to distinguish the outbound target power at a different time.

The processor 82 is further configured to tune a single-wavelength attenuation of the wavelengths of other services according to the fourth outbound target power.

After the first service is removed, the processor 82 tests and tunes the power of wavelengths of other services on the first optical multiplex section, and sets a corresponding attenuation for the wavelength of each service according to the transmission feature difference between different wavelengths, and therefore, the wavelength decrease brought by the removed first service will surely not affect the wavelengths of other services on the first optical multiplex section, a better optical signal-to-noise ratio deterioration balance is maintained for the optical multiplex section, and the signal receiving quality is improved.

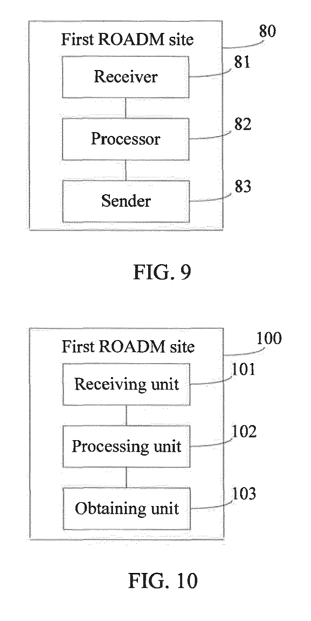

Further, as shown in FIG. 9, the first ROADM site further includes a sender 83.

The sender 83 is configured to send an operation request message to the next ROADM site of the first service after the processor 82 tunes the single-wavelength attenuation of the wavelengths of other services according to the fourth outbound target power, where the operation request message is a request for performing tuning on the next ROADM site, where the tuning is to tune an outbound power of the wavelengths of other services to a fifth outbound target power of the wavelengths of other services on the next ROADM site.

The fifth outbound target power is the outbound power of the wavelengths of other services on the next ROADM site when the optical cross connection created for the wavelength of the first service is not removed from the first ROADM site.

Tuning is performed for the wavelengths of other services on the first optical multiplex section on the first ROADM site after the optical cross connection created for the wavelength of the first service is removed, and therefore, when the wavelengths of other services enter the next ROADM site, the inbound power changes from what it is before the optical cross-connection created for the first service is removed from the first ROADM site. That is, the outbound power changes from what it is before the optical cross-connection created for the first service is removed from the first ROADM site. At this time, in order to prevent the wavelengths of other services on the first optical multiplex section from being affected by the change, the sender 83 should send an operation request message to the next ROADM site of the first service, where the operation request message is a request for performing tuning on the next ROADM site, where the tuning is to tune the outbound power of the wavelengths of other services to the fifth outbound target power of the wavelengths of other services on the next ROADM site. In this way, it is ensured that the downstream power of the next ROADM site does not change.

Optionally, the first service request message is also a request for performing switching on the first ROADM site of the first service, where the switching is to switch the wavelength of the first service from the first optical multiplex section to a third optical multiplex section, and the third optical multiplex section refers to an optical multiplex section between the first ROADM site of the first service and a first next ROADM site of the first service that is switched.

The processor 82 is further configured to obtain a wavelength resource of the first service on the first ROADM site.

The processor 82 is further configured to create an optical cross-connection of the wavelength of the first service on the third optical multiplex section according to the wavelength resource.

The processor 82 is further configured to obtain a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, where the services pass through the third optical multiplex section.

The processor 82 is further configured to obtain a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section.

The processor 82 is further configured to tune a single-wavelength attenuation of the wavelengths of all the services according to the sixth outbound target power.

It should be noted that the first next ROADM site is a specific ROADM site different from the next ROADM site, and the next ROADM site is the next ROADM site of the first service before link switching; and the first next ROADM site is the next ROADM site of the first service after link switching.

Further, the obtaining, by the processor 82, a wavelength resource of the first service on the first ROADM site, specifically includes:
after the optical cross-connection created for the wavelength of the first service is removed, obtaining the wavelength resource of the first service on the first ROADM site;
or
obtaining the wavelength resource of the first service on the first ROADM site according to a reserved wavelength resource.

In the link switching process, according to the features of a demultiplexing board of the first ROADM site, if the demultiplexing board has no lightwave reproducing function just like a WSD (Wavelength Selective Switching Demultiplexing Board, wavelength selective switching demultiplexing board), it is necessary to delete the optical cross-connection created for the wavelength of the first service before the wavelength resource of the first service on the first ROADM site can be obtained according to the wavelength resource of the first service that is released by the first optical multiplex section. As a result, in the link switching, it is necessary to remove the optical cross-connection created for the wavelength of the first service first, and then create an optical cross-connection for the wavelength of the first service.

Certainly, in the link switching process, according to the features of the demultiplexing board of the first ROADM site, if the demultiplexing board has a lightwave reproducing function just like an RDU (ROADM Demultiplexing Board, demultiplexing board), the wavelength resource of the first service on the first ROADM site can be obtained according to the reserved wavelength resource. In this way, no definite order exists between the step of removing the optical cross-connection created for the wavelength of the first service and the step of creating an optical cross-connection for the wavelength of the first service, and the order is not limited herein.

For the detailed process of removing the optical cross-connection on the first ROADM site in the link switching process, where the optical cross-connection is created for the wavelength of the first service, reference may be made to the embodiments shown in FIG. 2 and FIG. 5, and no repeated description is given here any further.

For the detailed process of creating an optical cross-connection on the first ROADM site in the link switching process, where the optical cross-connection is an optical cross-connection of the wavelength of the first service on the third optical multiplex section, reference may be made to the embodiments shown in FIG. 1 and FIG. 4, and no repeated description is given here any further.

The embodiment of the present invention provides a first ROADM site, where the first ROADM site includes a receiver and a processor. The receiver receives the first service request message sent by the next ROADM site of the first service, and the processor removes the optical cross-connection created for the wavelength of the first service; then the processor determines whether wavelengths of other services exist on the first optical multiplex section; if the wavelengths of other services exist on the first optical multiplex section, the processor obtains a deterioration balance value of a third optical signal-to-noise ratio of the wavelengths of other services on the first optical multiplex section according to the current optical signal-to-noise ratio of the wavelengths of other services on the first optical multiplex section on the first ROADM site and an optical signal-to-noise ratio on the next ROADM site; then the processor obtains a fourth outbound target power of the wavelengths of other services on the first ROADM site separately according to the obtained deterioration balance value of the third optical signal-to-noise ratio of the wavelengths of other services on the first optical multiplex section; and finally, the processor tunes a single-wavelength attenuation of the wavelengths of other services according to the fourth outbound target power.

As described in the foregoing embodiment, after removing the optical cross-connection created for the wavelength of the first service, the first ROADM site tests and tunes the wavelengths of remaining services on the first optical multiplex section, and, according to the transmission feature difference between different wavelengths, sets a corresponding attenuation for testing and tuning the wavelength of each service. Therefore, in the transmission process, the optical multiplex section keeps balanced between different wavelengths without being affected by the decrease of wavelengths, and the signal receiving quality is improved.

### Embodiment 6

This embodiment of the present invention provides a first reconfigurable optical add/drop multiplexer ROADM site 100. As shown in FIG. 10, the first ROADM site 100 includes a receiving unit 101, a processing unit 102, and an obtaining unit 103.

The receiving unit 101 is configured to receive a first service request message, where the first service request message is a request for creating an optical cross-connection for a wavelength of a first service on the first ROADM site.

The processing unit 102 is configured to create an optical cross-connection for the wavelength of the first service.

The obtaining unit 103 is configured to obtain a deterioration balance value of a first optical signal-to-noise ratio of wavelengths of all services on a first optical multiplex section according to a current optical signal-to-noise ratio of the wavelengths of all the services on the first ROADM site and an optical signal-to-noise ratio on a next ROADM site, where the services pass through the first optical multiplex section, and the first optical multiplex section refers to an optical multiplex section between the first ROADM site of the first service and the next ROADM site of the first service.

The obtaining unit 103 is further configured to obtain a first outbound target power of the wavelengths of all the services on the first ROADM site separately according to the obtained deterioration balance value of the first optical signal-to-noise ratio of the wavelengths of all the services on the first optical multiplex section.

The processing unit 102 is further configured to tune a single-wavelength attenuation of the wavelengths of all the services according to the first outbound target power.

Further, the receiving unit 101 further receives a first indication message before the processing unit 102 creates the optical cross-connection for the wavelength of the first service, where the first indication message is a request for performing tuning on the first ROADM site, where the tuning is to tune an outbound power of a wavelength of an existing service on a second optical multiplex section to a second outbound target power of the wavelength of the existing service on the first ROADM site, the second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site.

The processing unit 102 is further configured to: if the wavelength of the existing service exists on the second optical multiplex section, perform tuning on the first ROADM site, where the tuning is to tune the outbound power of the wavelength of the existing service to the second outbound target power of the wavelength of the existing service on the first ROADM site.

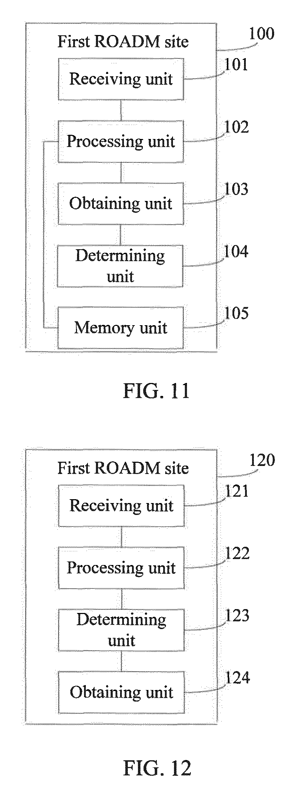

Further, as shown in FIG. 11, the first ROADM site 100 further includes a determining unit 104.

The obtaining unit 103 is further configured to obtain a current outbound power of the wavelengths of all the services on the first ROADM site after the processing unit 102 tunes the single-wavelength attenuation of the wavelengths of all the services according to the first outbound target power.

The determining unit 104 is configured to determine whether a difference between the current outbound power of the wavelengths of all the services and the first outbound target power falls within a preset range.

The obtaining unit 103 is further configured to: if the difference between the current outbound power of the wavelengths of all the services and the first outbound target power does not fall within the preset range, obtain a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, where the services pass through the first optical multiplex section.

The obtaining unit 103 is further configured to obtain a third outbound target power of the wavelengths of all the services on the first ROADM site separately according to the obtained deterioration balance value of the second optical signal-to-noise ratio of the wavelengths of all the services on the first optical multiplex section.

The processing unit 102 is further configured to tune a single-wavelength attenuation of the wavelengths of all the services according to the third outbound target power.

Optionally, as shown in FIG. 11, the first ROADM site 100 further includes a memory unit 105.

The memory unit 105 is configured to: before the processing unit 102 creates the optical cross-connection for the wavelength of the first service, reserve a wavelength resource for creating the optical cross-connection for the wavelength of the first service.

As regards how the first ROADM site 100 performs the automatic power testing and tuning, reference may be made to the descriptions about the embodiments shown in FIG. 1 and FIG. 4, and no repeated description is given here any further.

The embodiment of the present invention provides a first ROADM site, where the first ROADM site includes a receiving unit, a processing unit, and an obtaining unit. After the receiving unit receives a first service request message, the processing unit creates an optical cross-connection for the wavelength of the first service; then the obtaining unit obtains a deterioration balance value of the first optical signal-to-noise ratio of wavelengths of all services on the first optical multiplex section according to the current optical signal-to-noise ratio of the wavelengths of all the services on the first ROADM site and the optical signal-to-noise ratio on the next ROADM site, where the services pass through the first optical multiplex section; and then the obtaining unit obtains the first outbound target power of the wavelengths of all the services on the first ROADM site separately according to the obtained deterioration balance value of the first optical signal-to-noise ratio of the wavelengths of all the services on the first optical multiplex section; and finally, the processing unit tunes the single-wavelength attenuation of the wavelengths of all the services according to the first outbound target power.

As described in the foregoing embodiment, after creating an optical cross-connection for the wavelength of the first service, the first ROADM site tests and tunes both the wavelength of the service added on the first optical multiplex section and the wavelength of the existing service, and, according to the transmission feature difference between different wavelengths, sets a corresponding attenuation for testing and tuning the wavelength of each service. Therefore, in the transmission process, the optical multiplex section keeps balanced between different wavelengths without being affected by the increase of wavelengths, and the signal receiving quality is improved.

### Embodiment 7

This embodiment of the present invention further provides a first reconfigurable optical add/drop multiplexer ROADM site 120. As shown in FIG. 12, the first ROADM site 120 includes a receiving unit 121, a processing unit 122, a determining unit 123, and an obtaining unit 124.

The receiving unit 121 is configured to receive a first service request message sent by a next ROADM site of a first service, where the first service request message is a request for removing an optical cross-connection on the first ROADM site, where the optical cross-connection is created for a wavelength of the first service.

The processing unit 122 is configured to remove an optical cross-connection created for the wavelength of the first service.

The determining unit 123 is configured to determine whether wavelengths of other services exist on the first optical multiplex section, where the first optical multiplex section refers to an optical multiplex section between the first ROADM site of the first service and the next ROADM site of the first service.

The obtaining unit 124 is configured to: if the wavelengths of other services exist on the first optical multiplex section, obtain a deterioration balance value of a third optical signal-to-noise ratio of the wavelengths of other services on the first optical multiplex section according to a current optical signal-to-noise ratio of the wavelengths of other services on the first optical multiplex section on the first ROADM site and an optical signal-to-noise ratio on the next ROADM site.

The obtaining unit 124 is further configured to obtain a fourth outbound target power of the wavelengths of other services on the first ROADM site separately according to the obtained deterioration balance value of the third optical signal-to-noise ratio of the wavelengths of other services on the first optical multiplex section.

The processing unit is further configured to tune a single-wavelength attenuation of the wavelengths of other services according to the fourth outbound target power.

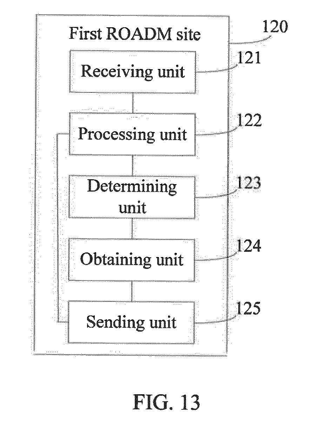

Further, as shown in FIG. 13, the first ROADM site 120 further includes a sending unit 125.

The sending unit 125 is configured to send an operation request message to the next ROADM site of the first service after the processing unit 122 tunes the single-wavelength attenuation of the wavelengths of other services according to the fourth outbound target power, where the operation request message is a request for performing tuning on the next ROADM site, where the tuning is to tune an outbound power of the wavelengths of other services to a fifth outbound target power of the wavelengths of other services on the next ROADM site, and the fifth outbound target power is an outbound power of the wavelengths of other services on the next ROADM site when the optical cross-connection created for the wavelength of the first service is not removed from the first ROADM site.

Optionally, the first service request message is also a request for performing switching on the first ROADM site of the first service, where the switching is to switch the wavelength of the first service from the first optical multiplex section to a third optical multiplex section, and the third optical multiplex section refers to an optical multiplex section between the first ROADM site of the first service and a first next ROADM site of the first service that is switched.

The obtaining unit 124 is further configured to obtain a wavelength resource of the first service on the first ROADM site.

The processing unit 122 is further configured to create an optical cross-connection of the wavelength of the first service on the third optical multiplex section according to the wavelength resource.

The obtaining unit 124 is further configured to obtain a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, where the services pass through the third optical multiplex section.

The obtaining unit 124 is further configured to obtain a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section.

The processing unit 122 is further configured to tune a single-wavelength attenuation of the wavelengths of all the services according to the sixth outbound target power.

Further, the obtaining, by the obtaining unit 124, a wavelength resource of the first service on the first ROADM site, specifically includes:
after the optical cross-connection created for the wavelength of the first service is removed, obtaining the wavelength resource of the first service on the first ROADM site;
or
obtaining the wavelength resource of the first service on the first ROADM site according to a reserved wavelength resource.

As regards how the first ROADM site 120 performs the automatic power testing and tuning, reference may be made to the descriptions about the embodiments shown in FIG. 2 and FIG. 5, and no repeated description is given here any further.

The embodiment of the present invention provides a first ROADM site, where the first ROADM site includes a receiving unit, a processing unit, a determining unit, and an obtaining unit. The receiving unit receives the first service request message sent by the next ROADM site of the first service, and the processing unit removes the optical cross-connection created for the wavelength of the first service; then the determining unit determines whether wavelengths of other services exist on the first optical multiplex section; if the wavelengths of other services exist on the first optical multiplex section, the obtaining unit obtains a deterioration balance value of a third optical signal-to-noise ratio of the wavelengths of other services on the first optical multiplex section according to the current optical signal-to-noise ratio of the wavelengths of other services on the first optical multiplex section on the first ROADM site and an optical signal-to-noise ratio on the next ROADM site; then the obtaining unit obtains a fourth outbound target power of the wavelengths of other services on the first ROADM site separately according to the obtained deterioration balance value of the third optical signal-to-noise ratio of the wavelengths of other services on the first optical multiplex section; and finally, the processing unit tunes a single-wavelength attenuation of the wavelengths of other services according to the fourth outbound target power.

As described in the foregoing embodiment, after removing the optical cross-connection created for the wavelength of the first service, the first ROADM site tests and tunes the wavelengths of remaining services on the first optical multiplex section, and, according to the transmission feature difference between different wavelengths, sets a corresponding attenuation for testing and tuning the wavelength of each service. Therefore, in the transmission process, the optical multiplex section keeps balanced between different wavelengths without being affected by the decrease of wavelengths, and the signal receiving quality is improved.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims.

## Claims

1. An automatic power testing and tuning method, wherein the method is applied to a first reconfigurable optical add/drop multiplexer ROADM site in an automatically switched optical network and comprises:
receiving a first service request message, wherein the first service request message is a request for creating an optical cross-connection for a wavelength of a first service on the first ROADM site;
creating an optical cross-connection for the wavelength of the first service;
obtaining a deterioration balance value of a first optical signal-to-noise ratio of wavelengths of all services on a first optical multiplex section according to a current optical signal-to-noise ratio of the wavelengths of all the services on the first ROADM site and an optical signal-to-noise ratio on a next ROADM site, wherein the services pass through the first optical multiplex section, and the first optical multiplex section refers to an optical multiplex section between the first ROADM site of the first service and the next ROADM site of the first service;
obtaining a first outbound target power of the wavelengths of all the services on the first ROADM site separately according to the obtained deterioration balance value of the first optical signal-to-noise ratio of the wavelengths of all the services on the first optical multiplex section; and
tuning a single-wavelength attenuation of the wavelengths of all the services according to the first outbound target power.

2. The method according to claim 1, wherein before creating an optical cross-connection for the wavelength of the first service, the method further comprises:
receiving a first indication message, wherein the first indication message is a request for performing tuning on the first ROADM site, wherein the tuning is to tune an outbound power of a wavelength of an existing service on a second optical multiplex section to a second outbound target power of the wavelength of the existing service on the first ROADM site, the second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site; and
if the wavelength of the existing service exists on the second optical multiplex section, performing tuning on the first ROADM site, wherein the tuning is to tune the outbound power of the wavelength of the existing service to the second outbound target power of the wavelength of the existing service on the first ROADM site.

3. The method according to claim 1 or 2, wherein after tuning a single-wavelength attenuation of the wavelengths of all the services according to the first outbound target power, the method further comprises:
obtaining a current outbound power of the wavelengths of all the services on the first ROADM site;
determining whether a difference between the current outbound power of the wavelengths of all the services and the first outbound target power falls within a preset range;
if the difference between the current outbound power of the wavelengths of all the services and the first outbound target power does not fall within the preset range, obtaining a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, wherein the services pass through the first optical multiplex section;
obtaining a third outbound target power of the wavelengths of all the services on the first ROADM site separately according to the obtained deterioration balance value of the second optical signal-to-noise ratio of the wavelengths of all the services on the first optical multiplex section; and
tuning a single-wavelength attenuation of the wavelengths of all the services according to the third outbound target power.

4. The method according to any one of claims 1 to 3, wherein before creating an optical cross-connection for the wavelength of the first service, the method further comprises:
reserving a wavelength resource for the optical cross-connection to be created for the wavelength of the first service.

5. An automatic power testing and tuning method, wherein the method is applied to a first reconfigurable optical add/drop multiplexer ROADM site in an automatically switched optical network and comprises:
receiving a first service request message sent by a next ROADM site of a first service, wherein the first service request message is a request for removing an optical cross-connection on the first ROADM site, wherein the optical cross-connection is created for a wavelength of the first service;
removing the optical cross-connection created for the wavelength of the first service;
determining whether wavelengths of other services exist on the first optical multiplex section, wherein the first optical multiplex section refers to an optical multiplex section between the first ROADM site of the first service and the next ROADM site of the first service;
if the wavelengths of other services exist on the first optical multiplex section, obtaining a deterioration balance value of a third optical signal-to-noise ratio of the wavelengths of other services on the first optical multiplex section according to a current optical signal-to-noise ratio of the wavelengths of other services on the first optical multiplex section on the first ROADM site and an optical signal-to-noise ratio on the next ROADM site;
obtaining a fourth outbound target power of the wavelengths of other services on the first ROADM site separately according to the obtained deterioration balance value of the third optical signal-to-noise ratio of the wavelengths of other services on the first optical multiplex section; and
tuning a single-wavelength attenuation of the wavelengths of other services according to the fourth outbound target power.

6. The method according to claim 5, wherein after tuning a single-wavelength attenuation of the wavelengths of other services according to the fourth outbound target power, the method further comprises:
sending an operation request message to the next ROADM site of the first service, wherein the operation request message is a request for performing tuning on the next ROADM site, wherein the tuning is to tune an outbound power of the wavelengths of other services to a fifth outbound target power of the wavelengths of other services on the next ROADM site, and the fifth outbound target power is an outbound power of the wavelengths of other services on the next ROADM site when the optical cross-connection created for the wavelength of the first service is not removed from the first ROADM site.

7. The method according to claim 5 or 6, wherein the first service request message is also a request for performing switching on the first ROADM site of the first service, wherein the switching is to switch the wavelength of the first service from the first optical multiplex section to a third optical multiplex section, and the third optical multiplex section refers to an optical multiplex section between the first ROADM site of the first service and a first next ROADM site of the first service that is switched; and
the method further comprises:
obtaining a wavelength resource of the first service on the first ROADM site;
creating an optical cross-connection of the wavelength of the first service on the third optical multiplex section according to the wavelength resource;
obtaining a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, wherein the services pass through the third optical multiplex section;
obtaining a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section; and
tuning a single-wavelength attenuation of the wavelengths of all the services according to the sixth outbound target power.

8. The method according to claim 7, wherein the obtaining a wavelength resource of the first service on the first ROADM site specifically comprises:
after the optical cross-connection created for the wavelength of the first service is removed, obtaining the wavelength resource of the first service on the first ROADM site;
or
obtaining the wavelength resource of the first service on the first ROADM site according to a reserved wavelength resource.

9. A first reconfigurable optical add/drop multiplexer ROADM site, wherein the first ROADM site comprises a receiver and a processor;
the receiver is configured to receive a first service request message and send the first service request message to the processor, wherein the first service request message is a request for creating an optical cross-connection for a wavelength of a first service on the first ROADM site;
the processor is configured to receive the first service request message sent by the receiver and create an optical cross-connection for the wavelength of the first service;
the processor is further configured to obtain a deterioration balance value of a first optical signal-to-noise ratio of wavelengths of all services on a first optical multiplex section according to a current optical signal-to-noise ratio of the wavelengths of all the services on the first ROADM site and an optical signal-to-noise ratio on a next ROADM site, wherein the services pass through the first optical multiplex section, and the first optical multiplex section refers to an optical multiplex section between the first ROADM site of the first service and the next ROADM site of the first service;
the processor is further configured to obtain a first outbound target power of the wavelengths of all the services on the first ROADM site separately according to the obtained deterioration balance value of the first optical signal-to-noise ratio of the wavelengths of all the services on the first optical multiplex section; and
the processor is further configured to tune a single-wavelength attenuation of the wavelengths of all the services according to the first outbound target power.

10. The first ROADM site according to claim 9, wherein:
the receiver is further configured to receive a first indication message and send the first indication message to the processor, wherein the first indication message is a request for performing tuning on the first ROADM site, wherein the tuning is to tune an outbound power of a wavelength of an existing service on a second optical multiplex section to a second outbound target power of the wavelength of the existing service on the first ROADM site, the second optical multiplex section refers to an optical multiplex section between the first ROADM site of the first service and a previous ROADM site of the first service, the existing service refers to a service that passes through the second optical multiplex section except the first service, and the second outbound target power is an outbound power of the wavelength of the existing service on the first ROADM site when no optical cross-connection is created for the wavelength of the first service on the previous ROADM site; and
the processor is configured to: receive the first indication message sent by the receiver, and, if the wavelength of the existing service exists on the second optical multiplex section, perform tuning on the first ROADM site, wherein the tuning is to tune the outbound power of the wavelength of the existing service to the second outbound target power of the wavelength of the existing service on the first ROADM site.

11. The first ROADM site according to claim 9 or 10, wherein:
the processor is further configured to obtain a current outbound power of the wavelengths of all the services on the first ROADM site after tuning the single-wavelength attenuation of the wavelengths of all the services according to the first outbound target power;
the processor is further configured to determine whether a difference between the current outbound power of the wavelengths of all the services and the first outbound target power falls within a preset range;
the processor is further configured to: if the difference between the current outbound power of the wavelengths of all the services and the first outbound target power does not fall within the preset range, obtain a deterioration balance value of a second optical signal-to-noise ratio of the wavelengths of all the services on the first optical multiplex section according to the current optical signal-to-noise ratio of the wavelengths of all the services on the first ROADM site and the optical signal-to-noise ratio on the next ROADM site, wherein the services pass through the first optical multiplex section;
the processor is further configured to obtain a third outbound target power of the wavelengths of all the services on the first ROADM site separately according to the obtained deterioration balance value of the second optical signal-to-noise ratio of the wavelengths of all the services on the first optical multiplex section; and
the processor is further configured to tune a single-wavelength attenuation of the wavelengths of all the services according to the third outbound target power.

12. The first ROADM site according to any one of claims 9 to 11, wherein the first ROADM site further comprises a memory, wherein
the memory is configured to: before the optical cross-connection is created for the wavelength of the first service, reserve a wavelength resource for creating the optical cross-connection for the wavelength of the first service.

13. A first reconfigurable optical add/drop multiplexer ROADM site, wherein the first ROADM site comprises a receiver and a processor;
the receiver is configured to receive a first service request message sent by a next ROADM site of a first service and send the first service request message to the processor, wherein the first service request message is a request for removing an optical cross-connection from the first ROADM site, wherein the optical cross-connection is created for a wavelength of the first service;
the processor is configured to receive the first service request message sent by the receiver and remove the optical cross-connection created for the wavelength of the first service;
the processor is further configured to determine whether wavelengths of other services exist on the first optical multiplex section, wherein the first optical multiplex section refers to an optical multiplex section between the first ROADM site of the first service and the next ROADM site of the first service;
the processor is further configured to: if the wavelengths of other services exist on the first optical multiplex section, obtain a deterioration balance value of a third optical signal-to-noise ratio of the wavelengths of other services on the first optical multiplex section according to a current optical signal-to-noise ratio of the wavelengths of other services on the first optical multiplex section on the first ROADM site and an optical signal-to-noise ratio on the next ROADM site;
the processor is further configured to obtain a fourth outbound target power of the wavelengths of other services on the first ROADM site separately according to the obtained deterioration balance value of the third optical signal-to-noise ratio of the wavelengths of other services on the first optical multiplex section; and
the processor is further configured to tune a single-wavelength attenuation of the wavelengths of other services according to the fourth outbound target power.

14. The first ROADM site according to claim 13, wherein the first ROADM site further comprises a sender, wherein
the sender is configured to send an operation request message to the next ROADM site of the first service after the single-wavelength attenuation of the wavelengths of other services is tuned according to the fourth outbound target power, wherein the operation request message is a request for performing tuning on the next ROADM site, wherein the tuning is to tune an outbound power of the wavelengths of other services to a fifth outbound target power of the wavelengths of other services on the next ROADM site, and the fifth outbound target power is an outbound power of the wavelengths of other services on the next ROADM site when the optical cross-connection created for the wavelength of the first service is not removed from the first ROADM site.

15. The first ROADM site according to claim 13 or 14, wherein the first service request message is also a request for performing switching on the first ROADM site of the first service, wherein the switching is to switch the wavelength of the first service from the first optical multiplex section to a third optical multiplex section, and the third optical multiplex section refers to an optical multiplex section between the first ROADM site of the first service and a first next ROADM site of the first service that is switched;
the processor is further configured to obtain a wavelength resource of the first service on the first ROADM site;
the processor is further configured to create an optical cross-connection of the wavelength of the first service on the third optical multiplex section according to the wavelength resource;
the processor is further configured to obtain a deterioration balance value of a fourth optical signal-to-noise ratio of wavelengths of all services on the third optical multiplex section according to a current optical signal-to-noise ratio of the wavelengths of all the services on the first ROADM site and an optical signal-to-noise ratio on the next ROADM site, wherein the services pass through the third optical multiplex section;
the processor is further configured to obtain a sixth outbound target power of the wavelengths of all the services on the third optical multiplex section on the first ROADM site separately according to the obtained deterioration balance value of the fourth optical signal-to-noise ratio of the wavelengths of all the services on the third optical multiplex section; and
the processor is further configured to tune a single-wavelength attenuation of the wavelengths of all the services according to the sixth outbound target power.

16. The first ROADM site according to claim 15, wherein the obtaining, by the processor, a wavelength resource of the first service on the first ROADM site, specifically comprises:
after the optical cross-connection created for the wavelength of the first service is removed, obtaining the wavelength resource of the first service on the first ROADM site;
or
obtaining the wavelength resource of the first service on the first ROADM site according to a reserved wavelength resource.
